# EUROPEAN PATENT APPLICATION

(11) **EP 3 741 920 A1**
(43) Date of publication of application: **25.11.2020**
(21) Application number: 20020242.2
(22) Date of filing: 20.05.2020
(51) Int. Cl.: E03F 3/04, E03F 3/06, E03F 5/02, E03F 5/04

(54) **RENOVATION DRAIN FOR REPAIRING A CONCRETE DRAIN**

(30) Priority: 21.05.2019 FI 20197077
(71) Applicant: Hämäläinen, Sami, 00930 Helsinki (FI)
(72) Inventor: Hämäläinen, Sami, 00930 Helsinki (FI)
(74) Representative: Sach, Greg Robert

(57) **Abstract**

Renovation drains and liner members are used for repairing sewer drains, storm drains, and other drains made of concrete. The invention concerns a renovation drain (100) for repairing a concrete drain comprising a bottom (101), an inlet (102) at the bottom, and an edge (103) extending around a renovation drain mouth. The renovation drain (100) further comprises a liner member (104) and the liner member is composed of a liner for lining such that a first branch (105) in the liner is intended to be assembled towards an inlet pipe of the concrete drain and a second branch (106) in the liner is intended to be assembled towards an outlet pipe of the concrete drain, and the liner member becomes attached to the renovation drain around the inlet.

## Description

Area of technology: an invention relates to repairing storm drains, yard drains, inspection chambers, or other drains made of concrete; the invention further relates to liner members and renovation drains to be used in pipeline renovations.

### Background of the technology

A storm drain (or storm sewer) is used for collecting rain water or storm water. The storm drain is situated such that rain water or storm water flows into the storm drain. The water rained on a roof can be led to gutters and via the tubing coupled to the gutters into a yard drain. From the yard drain the water is led, for example, into a municipal storm drainage system. Especially on old residential areas, rain water and sewer water are led in the same piping system and a yard drain coupled to the piping system possibly receives storm water as well as sewer water. On new residential areas, storm water and sewer water have separated piping systems, and in that case, the yard drain receives either storm water or sewer water.

The drain to be repaired is expected to compose mostly of concrete and thus it is termed a "concrete drain". The concrete drain has on its bottom one or more chutes made of concrete and each of the chutes is coupled to an inlet pipe of the concrete drain, or an outlet pipe of the concrete drain. The concrete drain can be repaired by cleaning its inner surface and re-covering the inner surface with a concrete layer. This re-covering of the inner surface, however, includes a lot of manual work, which makes the method expensive.

Epoxy spaying is another known renovation method but the epoxy spraying suits poorly for the concrete drain renovation because epoxy does not properly stick to wet concrete, and drying of a concrete drain takes a lot of time.

A renovation drain is a third known renovation method for a concrete drain. The renovation drain is made of plastic and its diameter is less than the diameter of the concrete drain to enable its assembly inside the concrete drain. First, holes are made on the sides of the renovation drain in order to fit parts. Then, the pipes incoming into the concrete drain and the pipes outgoing from the concrete drain are coupled through the fitting parts to the renovation drain. The renovation drain can be attached to the concrete drain with a portion of mass concrete or gravel.

Lining is a fourth known method for a concrete drain. A liner to be used in the method includes porous material, such as felt, and restorative material, such as PVC (polyvinyl chloride). The liner is impregnated with an impregnating compound including epoxy or some other type of resin. After hardening of the compound, the liner forms a durable lining inside the concrete drain.

A liner member includes a liner comprising multiple branches. For example, the liner member intended for a Y branch comprises three branches. When a packer and a liner member are moved, for example, by a ramrod to the Y branch, one of the liner branches is forced out of the packer by compressed air and simultaneously the compressed air pressures each liner branch against the inner walls of the Y branch.

A preliner is a tool to be used in lining. One purpose of the preliner is to operate as a mold against which a liner gets squeezed. This kind of mold is needed, for example, when corrosion has created holes to the cast iron pipe to be repaired.

A problem of the prior art relates to the situation in which the pipes connecting concrete drains are to be repaired using pipe lining and at least one of the drains is to be repaired placing a renovation drain inside of it, or alternatively, assembling a cleaning cap. An ordinary liner member is not suitable in this situation.

JP2002295785 can be considered to represent the closest prior art because it describes a liner member including two different manufacturing materials. The first material is rubber and the second material is a liner to be impregnated with compound such that the liner is adhered to a branch which is made of rubber. In more detail, the branch includes a collar to which the liner is adhered. JP2007321840 describes a liner member made of rubber only. JP2002301766 describes a liner member that includes two different types of plastic. US2011203719, US2009194184, and WO2008039767 describe liner members made of liner only.

Another problem of the prior art is related to manual work stages and the work hours needed for assembling liner members.

The third problem of the prior art is related to a fact that concrete drains differ from each other, due to which various liner members are needed for repairing them. A liner member can be manufactured, for example, by molding plastic but it is very uneconomic to make a cast for each different liner member.

### Summary of the invention

An aspect of the innovation is to solve the above-mentioned problems in repairing of concrete drains. The chutes on the concrete drain bottom may be located on the same line but it's also possible that an angle between them is less than 180 degrees. There may be more than one inlet pipe (or an outlet pipe) to the concrete drain and each inlet pipe (or each outlet pipe) is related to one chute. Thus, there exist variations between the numbers of chutes and between the chute angles. A Y branch should fit properly into the concrete drain chutes, but it's possible that no appropriate (plastic made) Y branch is available

An aspect of the invention is to use lining and a Y branch when renovating a concrete drain and pipes coupled with the renovation drain. The appropriate Y branch can be ordered from a sewing company by announcing them the number of inlet and outlet pipes and the angles between the pipes. The invention applies to various concrete drains, also concrete drains without chutes.

An aspect of the invention is to utilize a renovation drain which includes a Y branch and which is attachable to a piping connection of a building, a solid cover slab, a grate cover slab, or telescope pipe such that the telescope pipe is moveable in vertical direction in relation to the renovation drain bottom.

An aspect of the invention is that a renovation drain is a piece which retains its shape and which is attachable in a watertight manner to a Y branch. Then pipes (made of plastic), or other pieces retaining their shape, can be attached to the renovation drain.

The innovation concerns a renovation drain for repairing a concrete drain that comprises a bottom,
an inlet at the bottom, and
an edge extending around the renovation drain.

The renovation drain further comprises a liner member and the liner member includes a liner for lining such that a first branch in the liner is intended to be assembled towards an inlet pipe of the concrete drain, a second branch in the liner is intended to be assembled towards an outlet pipe of the concrete drain, and the liner member becomes attached to the renovation drain around the inlet.

### Brief description of the drawings

For a more complete understanding of examples and embodiments of the present invention, reference is now made to accompanying drawings in which:
FIGURE 1 shows a renovation drain assembled into a concrete drain,
FIGURE 2A shows a renovation drain with a board and the concrete drain bottom,
FIGURE 2B shows three sealant options,
FIGURE 3A shows a renovation drain and a cover slab.
FIGURE 3B shows a renovation drain and a telescope pipe,
FIGURE 4A shows renovation drain and a liner member comprising a preliner.
FIGURE 4B shows a liner member and a bushing projecting out of a preliner,
FIGURE 5 shows a renovation drain wherein a liner member comprises lapel,
FIGURE 6A shows an assembly tool for the liner member comprising lapels,
FIGURE 6B shows an assembly of a renovation drain,
FIGURE 7A shows another assembly tool for liner member,
FIGURE 7B shows use of half pipes in an assembly of a renovation drain,
FIGURE 8 shows a detachable board for a renovation drain,
FIGURE 9 shows a renovation drain that includes a buidling connection and an inspection hole.

### Detailed description of the invention

It is appreciated that the following embodiments are exemplary. Although the specification may refer to "one" embodiment, the reference is not necessarily made to the same embodiment(s), or the feature in question may apply to multiple embodiments.

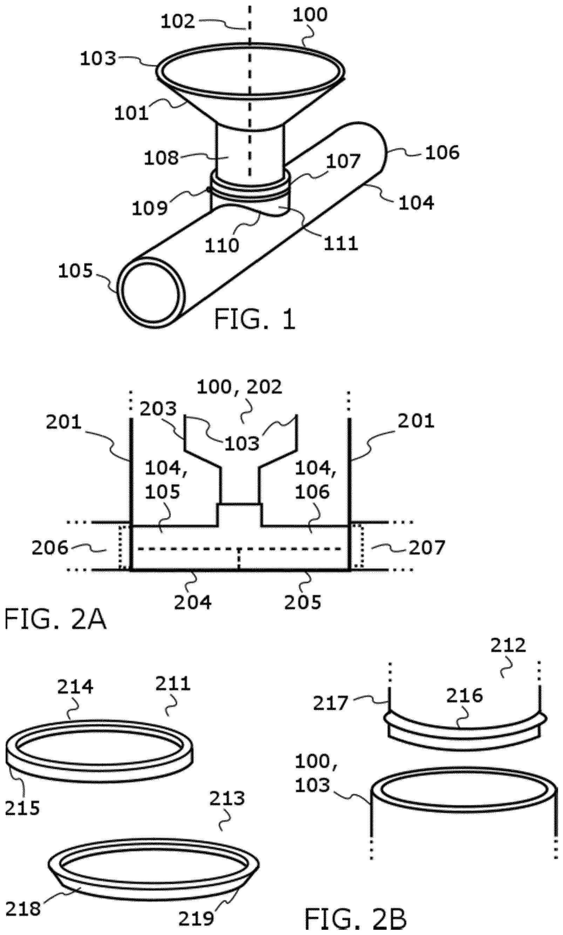

**FIGURE 1** shows a renovation drain 100 assembled into a concrete drain (the concrete drain and its inlet pipe and outlet pipe are not shown). Renovation drain 100 intended for repairing a concrete drain comprises a bottom 101, an inlet 102 at bottom 101, and an edge 103.

Renovation drain 100 further includes a liner member 104. Liner member 104 comprises a liner to be impregnated with compound such that a first branch 105 extends towards the inlet pipe of the concrete drain and a second branch 106 extends towards the outlet pipe of the concrete drain.

In one embodiment liner member 104 comprises a third branch 107 by which third branch 107 attaches with compound to renovation drain 100 around its inlet 102. In one embodiment renovation drain 100 comprises a bushing 108 for attaching liner member 104. In one embodiment third branch 107 of liner member 104 is attached with a clamp ring 109 against the outer surface of bushing 108.

For example, epoxy or resin is used as the compound for a liner. The liner can be pressurized, for example, with air or water. After hardening of the compound, first branch 105, second branch 106, and third branch 107 are solid and remain their shape. Renovation drain 100 includes in this example a funnel-shaped piece. The production material of the piece is e.g. plastic such as PVC (polyvinyl chloride) or PE (polyethylene), or the production material is metal such as aluminum or stainless steel.

Renovation drain 100 in accordance with the invention comprises, for example, a funnel-shaped piece (made of plastic) and a liner member 104 attached to it. Liner member 104 can be subcontracted such that it will include as many branches as needed and the angles between the branches are appropriate for the concrete drain to be renovated. Liner member 104 is composed of liner pieces that are attached with stitches to each other. For example, third branch 107 is attached with stitches 110 to first branch 105 and second branch 106. A liner hole 111 is formed between first branch 105 and second branch 106. Inlet 102 extends via bushing 108 and liner hole 111 into the liner.

**FIGURE 2A** shows a cross-section of renovation drain 100 and concrete drain 20, wherein concrete drain 201 is marked with a thick line and its middle and upper part is replaced with three dots. In this implementation example concrete drain 201 operates as an inspection drain.

Renovation drain 100 for repairing concrete drain 201 is assembled in the figure but the mouth 202 of renovation drain 100 is not yet closed. Mouth 202 can be closed, for example, with a lid (not shown).

In one embodiment, renovation drain 100 comprises a board 203 which is attached to bottom 101 and which extends around bottom 101. The upper edge of board 203 operates as the upper edge of renovation drain 100. Board 203 can be utilized in pipe connections. If a so-called house connection, i.e. a pipe from a real estate, is led into concrete drain 201 to be renovated, a hole can be made to board 203 of renovation drain 100 and then connect renovation drain 100 with a pipe (or pipes attached together) through that hole to the house connection.

Liner member 104 is assembled into concrete drain 201 such that first branch 105 of liner member 104 rests on the bottom of a first chute of concrete drain 201 and second branch 106 rests on the bottom of a second chute 205 of concrete drain 201. In one embodiment, first branch 105 extends somewhat inside an inlet pipe 206 and second branch 106 extends somewhat inside an outlet pipe 207.

Water is allowed to flow from inlet pipe 206 via liner member 104 into outlet pipe 207 when the liner included in liner member 104 is hardened. More than one inlet pipe and/or more than one outlet pipe may be coupled to concrete drain 201.

**FIGURE 2B** shows in a first view 211 a first sealant option for liner member 104 and concrete drain 201, and a second sealant option in a second view 212, and a third sealant option in a third view 213.

In first view 211, a sealant 214 is a rubber ring whose lower surface has a groove 215 that extends around the rubber ring. The diameter of sealant 214 at groove 215 is the same as the diameter of edge 103 in the renovation drain in Figure 2A. By using sealant 214 the renovation drain can be closed in water-tight manner.

In second view 212, a sealant 216 is rubber ring that is tensed and thus it adheres to the groove formed onto the outer surface of telescope pipe 217. The diameter of telescope pipe 217 is slightly smaller than the diameter of board 203 in renovation drain 100, thus telescope pipe 217 and concrete drain 201 can be placed one inside another such that a sealant 216 makes their joint water-tight.

In third view 213, a sealant 218 is intended to be attached to the edge of the renovation drain shown in Figure 1. The under surface of sealant 218 includes a groove 219 into which the edge of the renovation drain can be pushed.

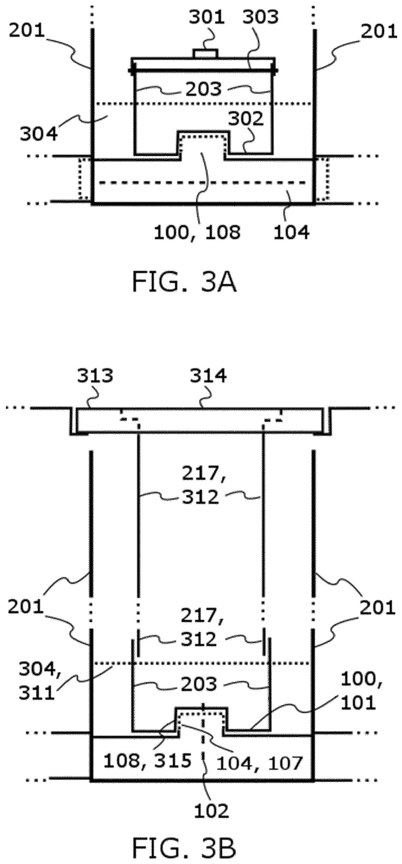

**FIGURE 3A** shows renovation drain 100 and its lid 301 placed on the bottom of concrete drain 201 wherein renovation drain 100 is viewed as a cross-section. The shape of renovation drain 100 is different than in Figure 1, because the bottom of renovation drain is flat and bushing 108 is located (partly) inside the renovation drain. The inner surface of bushing 108 provides a bonding surface for the liner member. If the bottom of the renovation drain is 5 mm thick, the inner surface of the hole cut to it provides a 5 mm high bonding surface. Such bonding surface is large enough when epoxy is used compound. Another possible purpose for bushing 108 is that it forms a sediment chamber 302 onto the bottom of renovation drain 100.

Lid 301 with a handle has been squeezed with a clamp ring 303 against board 203 of renovation drain 100. Assembly of renovation drain 100 is performed, for example, in the following manner. Filling paste 304, such as gravel or sand, is brought into concrete drain 201 such that concrete drain 201 is filled from its bottom up to the dot line.

**FIGURE 3B** shows an intersection view of renovation drain 100 and its board 203 assembled on the bottom of concrete drain 201 wherein telescope pipe 217 is pushed inside renovation drain 100. Renovation drain 100 and liner member 104 included in it can be assembled, as described in the above, by filling concrete drain 201 with filling paste 304 up to the point marked with a dot line 311. When the compound has hardened the assembly is continued by assembling telescope pipe 217.

In addition to a pipe-type-of part 312, telescope pipe 217 includes a cover slab 313 that is firmly attached to pipe-type-of part 312. Cover slab 313 includes a detachable cover 314 that provides an access inside renovation drain 100. Pipe-type-of part 312 in telescope pipe 217 is in this example made of plastic and cover slab 313 and cover 314 are made of cast iron. Telescope pipe 217 rests on its cover slap 313 on the ground. Because Telescope pipe 217 can move vertically in relation to the ground, possible elevations changes in relation the bottom of renovation drain 100 does not cause damage to renovation drain 100.

In one embodiment renovation drain 100 includes bushing 108 attached to bottom 101 such that inlet 102 extends through bushing 108. Third branch 107 attached to liner member 107 is attached with compound to bushing 108. Liner member 104 can be assembled by using a packer (not shown) that squeezes third branch 107 against the inner surface 315 of bushing 108.

Figure 3B shows an inspection drain. If concrete drain 201 to be renovated is a drain intended for rain water and sewer water, renovation drain 100 is such drain whose board 203 is made about 500 mm high for a building pipe connection and a solid cover 314 is replaced with a grate cover. In this embodiment the bottom of renovation drain 100 operates as sediment chamber 302 that collects sand and garbage from rain water.

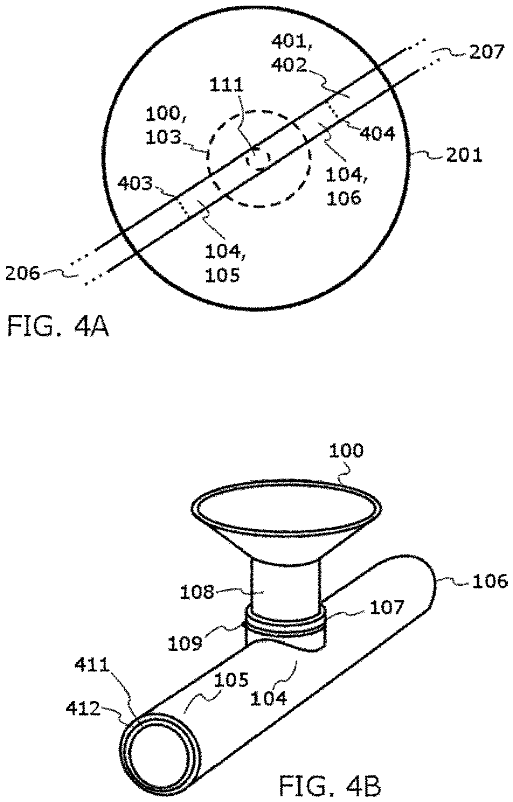

**FIGURE 4A** shows from a bird's perspective renovation drain 100 and a preliner intended for a (piece of) liner 402. Edge 103 of renovation drain 100 is marked with a dotted line. The liner is assembled from another concrete drain via inlet pipe 206 into concrete drain 201 and via outlet pipe 207 to the next concrete drain.

Because the liner is placed into preliner 401, it does not expand in open space inside concrete drain 201 too much when the liner is pressurized with some tool usable in a known lining method. In other words, preliner 401 results in that the liner will harden forming a pipe of a certain size.

After assembling liner 402, a hole it cut to liner 402 in order to assemble a renovation drain 100. Then first branch 105 and second branch 106 of liner member 104 are placed via the hole inside liner 402. In one embodiment, first branch 105 extends towards inlet pipe 206 up to dot line 403 but inside the inlet pipe 206. Correspondingly, second branch 106 extends towards outlet pipe 207 up to a dot line 404. Liner hole 111 in reparation drain 100 is located at the hole cut to liner 402.

**FIGURE 4B** shows liner 411, preliner 412 surrounding liner 411, and bushing 108 of renovation drain 100. The branches of liner member 104, i.e. first branch 105, second branch, and third branch are composed of liner 411. In this embodiment liner 411 is pressurized against preliner 412. Before the pressurizing, liner 411 is impregnated with compound and attached with clamp ring 109 against the outer surface of bushing 108 in renovation drain 100. The ends of first branch 105 and second branch 106 are tied in order to close them.

Pressurizing can be performed by feeding water through inlet 102 into liner 411. The compound attaches liner member 104 to the outer surface of bushing 108.

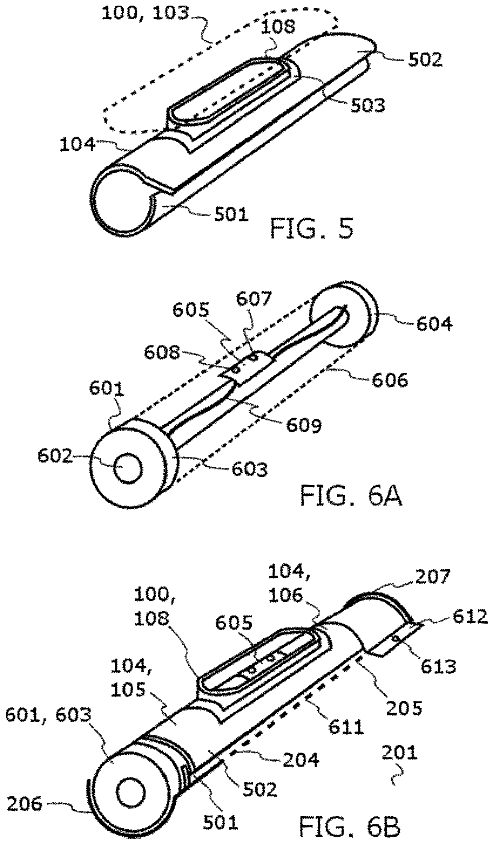

**FIGURE 5** shows with dashed lines renovation drain 100 and its edge 103. The renovation drain 100 can be assembled using an assembly tool which includes a by-pass flow pipe. The liner included in liner member 104 is horizontally split and the liner comprises a first lapel 501 and a second lapel 502 such that by placing first lapel 501 partly on second lapel 502 the liner forms a continuous pipe. The continuous pipe formed in this manner is hardened by compound in the assembly stage.

Figure 5 shows an example of bushing 108 whose cross-section is not a circle but an oval. Bushing 108 is low in height and its diameter is large. The large diameter enables an easy removing of the assembly tool via bushing 108 out of liner member and it enhances maintainability of the sewer. In one embodiment, renovation drain 100 comprises a plate type of attachment collar 503 with a curved form. Attachment collar 503 provides (quite broad) surface to which liner member 104 can be attached by compound.

**FIGURE 6A** shows an assembly tool 601 for liner member 104 shown in Figure 5. Assembly tool 601 comprises a by-pass flow pipe 602 and sealant rings such that a first sealant ring is attached to an end of by-pass flow pipe 602 and a second sealant ring is attached to the opposite end of by-pass flow pipe 602. The sealant rings can be pressurized.

Instead of by-passing the sewer or rain water through the concrete drain, the water can be led through a hose located on the ground to another drain. This kind of arrangement, however, may be problematic, if there is vehicle traffic on the ground.

In addition, assembly tool 601 comprises a coupler plate 605 and a bladder 606 (marked with dashed line). Bladder 606 is further adhered to a first sealant ring 603 and a second sealant ring 604. Coupler plate 605 is made of e.g. plastic and it is smaller than bushing 108 included in liner member 104. Therefore, coupler plate 605 and assembly tool 601 can be taken out of bushing 108. Two couplers are immersed into coupler plate 605 and one them, termed a "bladder coupler" 607, is intended for pressurizing bladder 606. A sealant ring coupler 608 is intended for pressurizing first sealant ring 603 and second sealant ring 604. Sealant ring coupler 608 comprises a Y branch from which hose 609 extends to first sealant ring 603 and another hose extends to second sealant ring 604.

**FIGURE 6B** shows assembling liner member 104 onto the bottom of concrete drain 201. Some parts of renovation drain 100, such as its edge, is omitted from Figure 6B. First branch 105 rests on the bottom of a first chute 204 in concrete drain 201 and second branch 106 rests on the bottom of second chute 205 in concrete drain 201. The edges of first chute 204 and second chute 205 are marked with a dashed line 611.

The assembly of liner member 104 comprises the following stages. First lapel 501 of the liner is longer than the other one and it is wrapped around assembly tool 601. Second lapel 502 is placed on first lapel 501. The ends of assembly tool 601 and the ends of liner member 104 are pushed into the pipes of concrete drain. In more detail, first sealant 603 is pushed into inlet pipe 206 and thus the end of first branch of liner member 104 is placed into inlet pipe 206.

Second sealant ring (not shown) of assembly tool 601 is pushed into outlet pipe 207. Therefore, the end of second branch 106 is pushed into outlet pipe 207. Second branch 106 is attached with a half-pipe 612 to second chute 205. Finally, the edges of half-pipe 612 are attached (e.g. with a nail gun) to the bottom of concrete drain 201. In this example a nail 613 has penetrated the edge of half-pipe 612 and it has sunk into the concrete. First branch 105 is uncovered in figure 6A. After first branch 105 is covered with a half-pipe, liner member 104 is pressurized via bushing 108 by coupling fluid hoses to the couplers of coupler plate 605. For example, water or air can be used as pressurizing fluid.

In one embodiment, liner member 104 comprises half-pipe 612 intended for attaching liner member 104. When the liner is handled with compound, and the compound is hardened, half-pipe 612 and the liner form the same object.

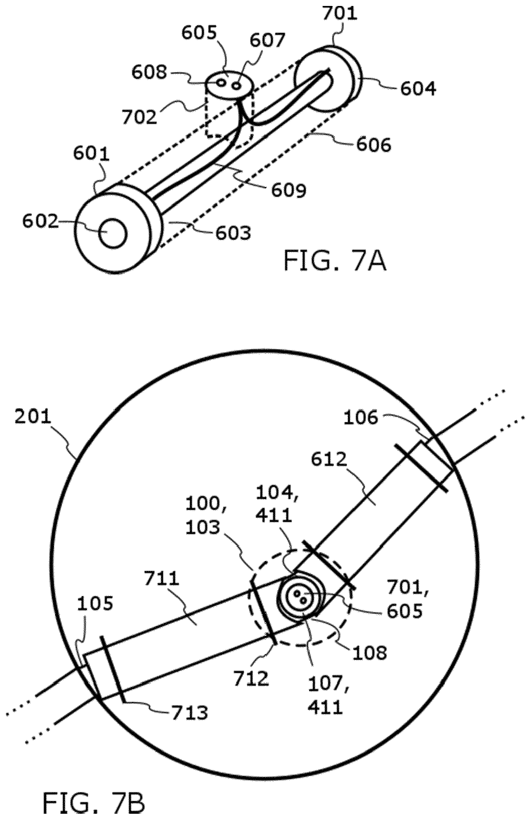

**FIGURE 7A** shows an assembly tool 701 for the liner shown in figure 4B. The components of assembly tool 701 are operationally similar as the components of assembly tool 601 presented in the above. The components are by-pass flow pipe 602, first sealant ring 603, second sealant ring 604, coupler plate 605, bladder 606, bladder coupler 607, sealant ring coupler 608, and a hose 609 (for first sealant ring). Because the liner has a third branch (not shown), bladder 606 in assembly tool 701 comprises a projection 702 for pressurizing the third branch. Coupler plate 605 is placed to the end of projection 702.

**FIGURE 7B** shows from a bird's perspective another example of liner member 104 to be formed on an installation place. Renovation drain 100 and its edge 103 are shown with dashed lines.

Liner 411 included in liner member 104 is split and it includes lapels. The first lapel is wrapped around assembly tool 701 for assembling liner 411. In this manner, assembly tool 701 remains inside the liner and the bladder included in assembly tool 701 can used for pressurizing the liner.

Next the liner and assembly tool 701 are covered with half-pipe 612 and a second half-pipe 711. Half-pipes are brought to the installation place to be shaped thereat. Half-pipe 612 and second half-pipe 711 are cut at the installation place with a foxtail saw. A piece having a shape of semicircle is cut from the end of half pipe 612 for third branch 107 of liner member 104. Correspondingly, a piece having the shape of semicircle is cut from the end second half pipe 711 for third branch 107.

Figure 7B shows a situation in which bushing 108, i.e. the third branch of the liner, extends out from the bottom of concrete drain 201 and a technician has placed bushing 108 around of it. Renovation drain 100 is of the same kind as in Figure 1.

The half pipes cover first branch 105 and second branch 106 almost completely. Coupler plate 605 attached to projection 702 is the only visible part of assembly tool 701. The both half-pipes are attached to the bottom of concrete drain 201, for example, with pieces of punched tape and nails.

Punched tape is made of e.g. steel and it is generally used in construction work. Second half-pipe 711 is attached to the concrete drain with punched tape such that a piece of punched tape 712 passes over first half-pipe and it is attached from the both ends to the bottom of concrete drain 201 with nails of a nail gun. A corresponding piece of punched tape 713 is located at the opposite end of second half-pipe 711. It is possible to make a curve or an angle to liner member 104 by using half-pipes. The angles between the branches of liner member 104 should correspond to the angles of the chutes on the bottom of concrete drain 201.

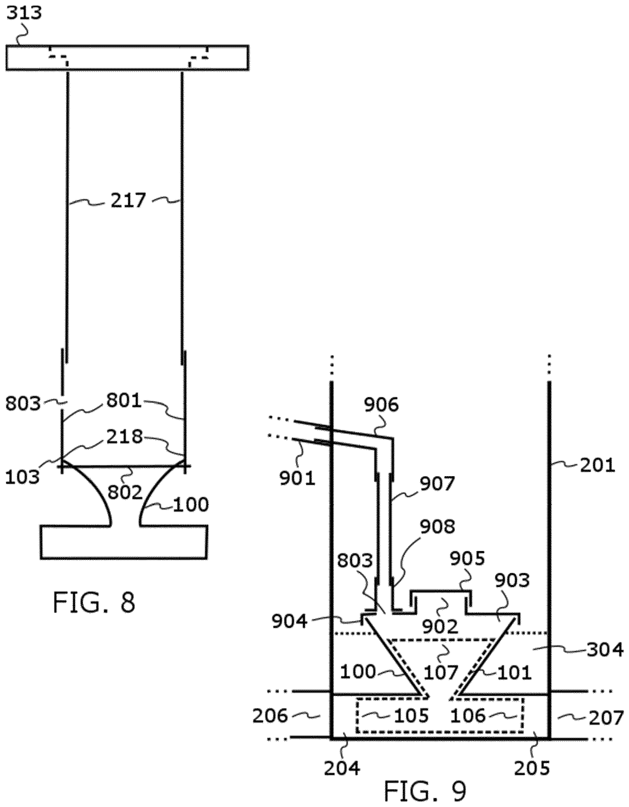

**FIGURE 8** shows a renovation drain system 800 for repairing a concrete drain. As the board shown in Figure 2A, a detachable board 801 adheres to bottom 101 of renovation drain 100 and extends around it.

Edge 103 of renovation drain 100 comprises sealant 218. A clamp ring 802 surrounds detachable board 801 and presses detachable board 801 against sealant 218, and makes the joint between detachable board 801 and renovation drain 100 water-tight.

Telescope pipe 217 is attached to detachable board 801 and telescope pipe 217 rests on its cover slap 313 on the ground. Because telescope pipe 217 can move vertically in relation to detachable board 801, possible elevation changes in relation the bottom of renovation drain 100 does not cause damage to detachable board 801 or renovation drain 100. Detachable board 801 includes a house connection hole 803 for coupling renovation drain 100 to the pipe coming from the house.

**FIGURE 9** shows an example of renovation drain 100 having an inspection hole, wherein renovation drain 100 is illustrated with a dotted line. Renovation drain 100 does not include board or a bushing but its bottom 101 has a funnel form and broadens upwards from the bottom of concrete drain 201. Correspondingly, third branch 107 included in renovation drain 100 has a funnel form and broadens upwards towards an upper part 903 of renovation drain 100.

Third branch 107 is formed such that liner member 104 can be attached without wrinkles at its third branch 107 by compound tightly against the inner surface of the bottom in renovation drain 100. First branch 105 extends in the bottom of concrete drain on first chute 204 towards inlet pipe 206 and second branch 106 extends on second chute 205 towards outlet pipe 207.

Renovation drain 100 comprises a lid 904 that is attached to the edge of the renovation drain, for example, with a clamp ring (not shown). In the embodiment shown in the figure, an inspection hole 902 is formed to lid 904 and inspection hole 902 is closed with an openable plug 905. Inspection hole can be used, for example, to check the condition of inlet pipe 206 and outlet pipe 207.

The side of concrete drain 201 includes a house connection 901 into which a curved pipe 906 is pushed. Curved pipe 906 is coupled via a pipe 907 and a pipe having a flange 908 to lid 904 of renovation drain 100. In certain embodiment lid 904 is made of plastic and its upper surface is relatively thick, for example, 1 cm thick. House connection hole 803 is cut on lid 904 and flange pipe 908 is screwed at its flange to lid 904 above house connection hole 803

Renovation drain 100 is in this manner coupled to house connection 901. The assembly of renovation drain 100 is finished by filling paste 304 such that filling paste 304 almost extends to lid 904 and supports renovation drain 100.

While the invention has been described in connection with exemplary embodiments and implementations the invention further covers various modifications and equivalent arrangements within the following claims.

## Claims

1. A renovation drain (100) for repairing a concrete drain comprising
a bottom (101),
an inlet (102) at the bottom, and
an edge (103) extending around a renovation drain mouth,
**characterized in that** the renovation drain further comprises
a liner member (104) to be placed on a concrete drain bottom and the liner member includes a liner for lining such that a first branch (105) in the liner is intended to be assembled towards an inlet pipe of the concrete drain and a second branch (106) in the liner is intended to be assembled towards an outlet pipe of the concrete drain, and the liner member becomes attached to the renovation drain around the inlet.

2. The renovation drain as claimed in claim 1, **characterized in that** the renovation drain comprises a bushing (108) attached to the bottom (101) such that the inlet (102) extends through the bushing.

3. The renovation drain as claimed in claim 1, **characterized in that** the liner member (104) comprises a third branch (107) for attaching the liner member to the renovation drain.

4. The renovation drain as claimed in claim 1, **characterized in that** the renovation drain is attachable to a telescope pipe (217) such that the renovation drain and the telescope pipe are located one inside another.

5. The renovation drain as claimed in claim 1, **characterized in that** the renovation drain comprises a sediment chamber (302).

6. The renovation drain as claimed in claim 1, **characterized in that** a liner (402) assembled beforehand is usable as a support part in assembling of the liner member (104) of the renovation drain.

7. The renovation drain as claimed in claim 1, **characterized in that** a preliner is used as a support part in assembling of the liner member (104).

8. The renovation drain as claimed in claim 1, **characterized in that** the liner included in the liner member comprises a first lapel (501) and a second lapel (502) such that the liner forms a tube by placing the first lapel and the second lapel partly one upon the other.

9. The renovation drain as claimed in claim 1, **characterized in that** the renovation drain comprises a bushing (108) for attaching the liner member (104).

10. The renovation drain as claimed in claim 1, **characterized in that** the liner member (104) is attached to a half pipe (612) and a second half pipe (711).

11. The renovation drain as claimed in claim 1, **characterized in that** the renovation drain comprises a detachable board (801) that extends around the bottom (101) and is attached to the bottom.

12. The renovation drain as claimed in claim 1, **characterized in that** the detachable board (801) comprises a house connection hole (803) for attaching the renovation drain to a house connection.

13. The renovation drain as claimed in claim 1, **characterized in that** the third branch in the liner member (104) broadens towards an upper part (903) of the renovation drain.

14. The renovation drain as claimed in claim 1, **characterized in that** the renovation drain comprises a lid (301, 904).

15. The renovation drain as claimed in claim 14, **characterized in that** the lid (904) comprises a house connection hole (803).
